# EUROPEAN PATENT SPECIFICATION

(11) **EP 1 852 662 B1**
(45) Date of publication and mention of the grant of the patent: **29.10.2008**
(21) Application number: 07445018.0
(22) Date of filing: 03.05.2007
(51) Int. Cl.: F24F 13/32

(54) **A hanger assembly**
Anhängeranordnung
Ensemble de support

(30) Priority: 03.05.2006 SE 0600977
(43) Date of publication of application: 07.11.2007
(73) Proprietor: Bengt Sellö AB, 114 48 Stockholm (SE)
(72) Inventor: Sellö, Bengt, 11448 Stockholm (SE)
(74) Representative: Janson, Ronny

(56) References cited:
- EP-A1- 0 899 519
- WO-A-01/04547
- WO-A-93/15366
- GB-A- 770 676
- JP-A- 8 338 569

## Description

The invention relates to a fitting for suspending a supply-air terminal device on a flat support surface, of the kind that is seen in the preamble of the appended claim 1.

Fittings for suspending supply-air terminal devices of the kind that is defined in the preamble of claim 1 are known from practice (see for example patent document WO-A-01/04547).

An object of the invention is to provide a fitting that affords a simple and convenient suspension of the supply-air terminal device, and furthermore affords favourable conversion of the flow of supply air and room air conveyed thereby that flows away from the supply-air terminal device toward the support surface.

A special object is to provide a fitting that can afford an additional fine adjustment of the flow pattern of the air flows leaving the area of the supply-air terminal device.

The objects are entirely or partly attained by the invention.

The invention is defined in the appended independent claim.

Embodiments of the invention are defined in the appended dependent claims.

In the following description, a presently particularly preferred embodiment of the invention is accounted for.
- Fig. 1: schematically shows a vertical section through a room having a supply-air terminal device that is suspended on a wall by means of a fitting.
- Fig. 2: schematically shows a view taken along the line II-II in Fig. 1.
- Fig. 3: shows the fitting according to Fig. 2 having another setting of a fitting fin.

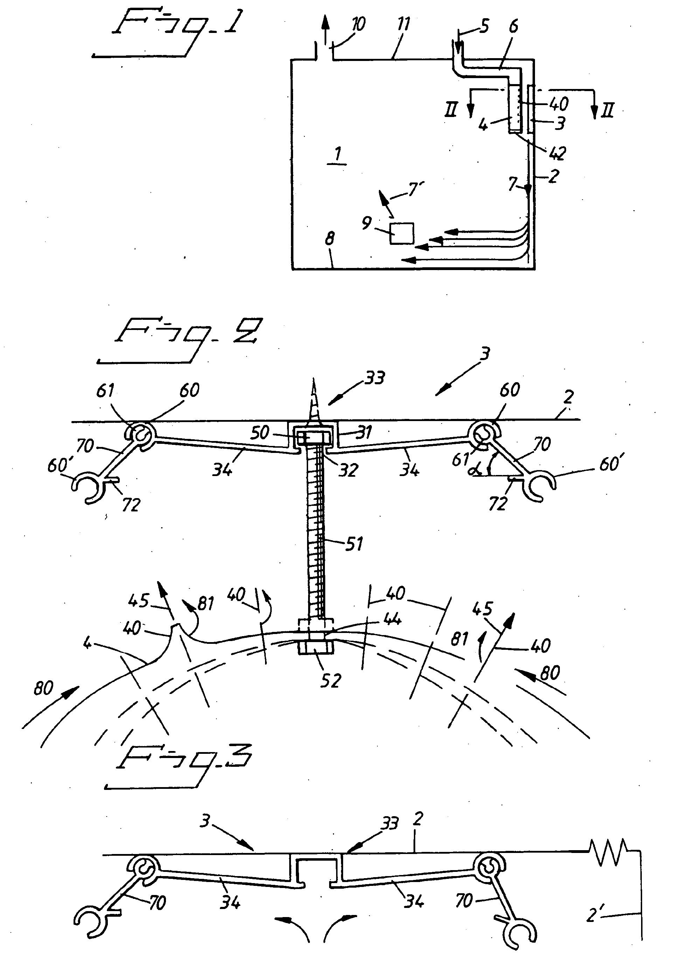

Fig. 1 schematically illustrates a room 1 having a wall 2, which, by means of a fitting 3, carries a supply-air terminal device 4, which is supplied with supply air 5 via a supply-air pipe 6. The supply-air terminal device 4 has a plurality of nozzles 40, which generally direct the supply air toward the fitting 3 on the wall 2. When the supply air 5 has a lower temperature than the air of the room 1, the supply air will be mixed with the room air while forming a thin air layer 7, which flows downward along the wall 2 and then is deflected along the floor 8 and stratifies on the same. A relatively warm object 9, which is impinged by the air 7, will then be cooled and the accordingly heated air flow 7' rises upward in the room 1 in order to finally escape via an exhaust-air pipe 10 in the ceiling 11 of the room, in a manner known per se.

From Fig. 2, it can be understood that the fitting 3 is mounted so that it rests directly against the wall 2 and has a central nut groove 31, the bottom of which rests against the surface 2 and the opening 32 of which is facing the interior of the room and the centre of the supply-air terminal device 4. The supply-air terminal device 4 is in the form of a circular-cylindrical pipe section having an end cap 42 and an inlet end that coaxially connects to the pipe 6. The mutually alike nozzles 40 are shown formed on the outside of the section 4 and are shaped as venturi nozzles in order to, with a minimized noise generation, allow air to flow out at a speed of at least 10 m/s and preferably 12-15 m/s through the respective nozzle. Each nozzle can have a smallest flow diameter of approx. 5 mm. The section 4 can have a diameter in the range of 10-40 cm, and preferably has the nozzles 40 thereof arranged with the nozzles in longitudinal rows, the rows having an interspacing in the circumferential direction of approx. 2 cm. A diametrical plane through the section 4 and the width centre of the fitting 3 extends halfway between two rows of nozzles. In the example, the section 4 has totally six rows of nozzles, wherein the spacing between the nozzles in the rows also may be approximately 2 cm.

The fitting 3 is shown to have a groove 31, the bottom of which rests against the surface 2 and the opening gap 32 of which is facing the supply-air terminal device 2. The groove 33 is shaped to receive nuts 50 in a rotationally secured way, so that the nuts 50 can be displaced along the groove 33. Bolts 51 extend through appurtenant holes 44 in the section 4 and have the head 52 thereof on the inside of the section 4. The bolt shank 51 has the threaded free end thereof received in an appurtenant nut 50. Possibly, the bolt shank 51 may be full-threaded and carry a lock nut (not shown) in order to enclose the wall of the pipe section 4 between the lock nut and the bolt head 52. The fitting 3 is shown to comprise rings 34 that extend outward from the free edge parts of the groove 33, in opposite directions. Along the free edge thereof, the wings 34 have a first swivel-joint portion 60, which receives a second swivel-joint portion 61 along one of the long edges of a fin 70, the other long edge of which has a swivel-joint portion 60 of the same design as the swivel-joint portion 60 of the wing 34. In this way, an additional fin 70 may be connected by the portion 61 thereof to the shown free joint portion 60 of the fin 70 shown. The swivel joint 60, 61 is per se of a standard design, which may be locked in respect of swivelling by the fact that a plastic plug, including an appurtenant expander screw, is inserted in the axial end of the swivel joint.

At the outer end thereof, on the side thereof facing the section 4, the fin 70 carries a border 72, which is directed inward toward the groove 33 and forms an acute angle α with the main part of the fin 70. The angle α is shown to be about 45°, but may be selected in the interval of 30-60°. The joint portions 60 of the wings 34 are tangent to the flat support surface 2. The fitting 33 may be attached by fixing screws, not shown, which extend through the bottom of the groove 33 into the support 2.

The section 4 is suspended at the fitting 3 by means of at least two bolts 51.

It will be appreciated that the fins 70 may be angularly preset in relation to the wings 34 and be locked in the set turning position. When the supply-air flows 45 through the respective nozzle 40 leave the nozzles 50, they produce an ejector effect and convey room air 80 that can flow along the external surface of the section 4 between the external wall thereof and the outer ends of the nozzles 40, each flow 45 conveying a partial flow 81 of room air from the room-air layer 80 and is mixed with the same. In practice, each air flow 45 may mix with an up to four times larger room-air flow 81. From Fig. 2, it can be understood that the total width of the fitting 3 is approximately as large as the circumference spacing between the rows of the nozzles 40 that are most spaced-apart in the circumferential direction.

As is seen in Fig. 2, the fitting and the parts of the wings 34 connecting to the groove 33 have the greatest distance from the reference surface 2, and the wings 34 have the smallest distance thereof to the reference surface 2 at the joint device 60, 61.

Usually, the fins 70 are folded down against the surface 2 in order to, together with the respective wing 34, form a guide rail for the flow of mixed supply air and room air established outside the nozzles 40. Since the fins 70 have equal turning positions in relation to the adjacent wing 34, approximately equal flows are deflected along the respective wing 34, but the balance between these flow parts can be regulated by altering the turning positions of the fins 70. When the fin 70 is turned out toward the supply-air terminal device 4, the border 72 presents a particularly strong resistance against the mixed air flow flowing along the wing 34 and the fin 70. If the fin 70 at the opposite side of the fitting simultaneously is turned out closer to the reference surface 2, it is possible to alter the flow pattern, so that the main part of the mixed air flow flows along the fitting past the fin 70, which is maximally turned out toward the support surface 2. By altering the mutual turned-out positions of the fins 70, there is a possibility of a far-reaching selectable distribution of the total mixed air flow deflected to a thin layer close by the plane, toward the respective side of the fitting 3.

The distance between the fitting 3 and the supply-air terminal device 4 is approximately half the maximal width of the fitting 3 such as is shown in Fig. 2.

The fitting forms a guide surface for the mixed air flow and has suitably the same length as the supply-air terminal device, i.e., approximately the same length as the rows of nozzles 40 of the piping section 4.

The groove and the wings as well as the joint portions belonging to the wings are suitably manufactured as an extruded profile element, for instance of aluminium, which hence can be cut off into lengths corresponding to standard lengths of the supply-air terminal devices. Likewise, the fins may be formed of extruded profile elements that are cut off into the same length and joined to the wing and to each other, respectively.

From Fig. 2, it can be understood that the rows of nozzles are approximately equally interspaced, the outermost rows of nozzles having an interspacing of approximately 10 cm along the circumference. The connecting elements that join between the supply-air terminal device and the groove of the fitting have approximately the same length independently of the diameter of the supply-air terminal device, and this means that the fitting, while essentially retaining the function thereof, can be utilized for supply-air terminal devices of many different diameters, from approx. 10 cm up to, for instance, 50 cm or more.

Such as is outlined in Fig. 2, the fitting 3 may be attached to the support surface 2 by means of screws extending through the bottom of the groove 33 and into the support 2, the heads of the screws suitably being countersunk in the bottom wall of the intermediate portion 33.

From Fig. 2, it can be understood that the central fitting part, comprising the intermediate portion 33, the wings 34 and the joint portions 60, has a width that essentially corresponds to two thirds of the circumference extension of the field of nozzles 40. Furthermore, it can be seen that the wings 34 converge in relation to the wall/ceiling surface 2, from the mouth 34 of the intermediate portion 33 toward the outer long edges thereof, the converging angle being shown to be small, approx. 5°, and wherein the angle should be in the range of 3-20°. Thus, the fitting affords, even without fins, a favourable uniform deflection of the flow of supply air and room air so that this forms two substantially equal counter-directed partial flows, which get the form of thin layers flowing along and next to the wall surface 2, without said partial flows substantially disturbing the adjacent room-air mass.

The mountings of the fins 60, 61 allow the fins to be turned up to a limit position, where they are positioned approx. 45° from the plane of the wings. In this way, the fins can be utilized to produce controlled flow shares along the respective wing.

Thanks to the speed of the air jets through the nozzles 40, a kind of ejector effect is attained around the air jets exiting the nozzles, whereby room air from the area around the respective nozzle being conveyed and intermixed into the supply-air jet exiting the nozzle. A relatively large share of room air is intermixed into the respective supply-air jet, and is conveyed by the same toward the fitting. The room air that is sucked into and mixed with the respective supply-air jet flows diffusely from the interior of the room toward the side of the piping section exposed to the room, and flows along the circumference of the piping section into a space between the external surface of the pipe section and a surface defined by the mouths of the nozzles 40.

## Claims

1. Fitting for suspending a supply-air terminal device on a support surface (2) such as a wall or a ceiling of a room (1), the supply-air terminal device comprising an elongate piping section (4), one end of which connects to a supply-air pipe (6), the piping section (4) having a plurality of air outflow nozzles (40), which are distributed along the piping section (4) in a circumference area thereof, the nozzles (40) projecting from the outside of the piping section, and the fitting (3) being arranged mountable on the support surface (2) in a fixed orientation in relation to the same, carrying the piping section (4) by means of connection devices (50, 52), and having a pair of wings that project in opposite directions from a respective side of a central lengthwise intermediate portion (33), the wings (34) being essentially flat and mirror-symmetrical in relation to a symmetry plane of the fitting extending through and along the intermediate portion, and the connection devices (50, 52) holding the piping section in an orientation in which the axis of the piping section lies in the symmetry plane of the fitting, **characterized in that** each wing, in the direction away from the intermediate portion, converges at an angle of at least 3° in relation to the support surface (2) in a direction that extends away from the intermediate portion and perpendicularly to the longitudinal axis thereof, that the outer long edge of each wing (34) parallel to the intermediate portion (33) is connected to an appurtenant fin (70) via a lockable swivel joint (60, 61), the axis of the swivel joint (60, 61) being substantially parallel to the longitudinal axis of the intermediate portion (33), and that the total width of the fitting including the intermediate portion (33), the wings (34) and a pair of fins (70) essentially corresponds to the largest spacing in the circumferential direction between the nozzles (40) in said circumference area.

2. Fitting according to claim 1, **characterized in that** the fitting has a central elongate intermediate portion (33), which is arranged to receive one end of the connection devices (50, 52), the other end of which is connected to the piping section (4) in the symmetry plane of the fitting.

3. Fitting according to claim 1 or 2, **characterized in that** the free long edge of the wing (34) has a first formation (60) forming one part of the swivel joint, that one of the long edge parts of the fin (70) has a second formation (61) that articulately co-operates with the first formation (60) of the wing, and that the other long edge part of the fin (70) has the first formation (60) to be articulately connectable to an additional fin of the same design.

4. Fitting according to any one of claims 1-3, **characterized in that** the fin (70), at the outer end thereof on the side thereof facing the piping section (4), has a projecting border (72) that extends along the length of the fin and that forms an acute angle with the portion of the fin (70) between the border (72) and the first long edge part (61) of the fin.

5. Fitting according to any one of claims 1-4, **characterized in that** the intermediate portion (33) is in the form of a groove that receives a nut (50) in a displaceable rotationally secured way, which nut belongs to the respective attaching device (50-51).

6. Fitting according to claim 5, **characterized in that** the groove is arranged to rest, with the bottom thereof, against the support surface, that the wings connect, by one of the long edges (60) thereof, to the respective opening edge of the groove, and that the other long edge parts (60) of the wings (34) substantially rest against the support surface (2), the wings (34) preferably being essentially flat.

7. Fitting according to any one of claims 1-6, **characterized in that** the parts of the swivel joints (60, 61) generally have a C-shaped cross-section, and that the swivel joints are interlockable by means of an expander mountable in the end of the inner part of the swivel joint in order to bring the parts into mutual radial engagement.

8. Fitting according to any one of claims 1-7, **characterized in that** the attaching devices (50-52) are selected in order to establish a distance between the piping section and the intermediate portion (33) of the fitting, which distance essentially corresponds to the width of a wing and a fin.

## Patentansprüche

1. Fitting zum Aufhängen einer Zuluft-Auslassvorrichtung an einer Tragefläche (2) wie beispielsweise einer Wand oder einer Decke eines Raums (1),
wobei die Zuluft-Auslassvorrichtung einen länglichen Rohrabschnitt (4) umfasst, dessen eines Ende mit einem Zuluft-Rohr (6) verbunden ist, wobei der Rohrabschnitt (4) eine Mehrzahl von Luft-Ausflussdüsen (40) aufweist, die entlang des Rohrabschnitts (4) in einem Umfangsbereich desselben verteilt sind, wobei die Düsen (40) von der Außenseite des Rohrabschnnitts vorstehen, und
wobei das Fitting, welches befestigbar auf der Tragefläche (2) in einer festen Orientierung in Bezug auf diese angeordnet ist, den Rohrabschnitt (4) mit Hilfe von Verbindungsmitteln (50, 52) trägt und ein Paar von Flügeln aufweist, die sich von einer jeweiligen Seite eines zentralen in Längsrichtung betrachtet mittleren Abschnitts (33) erstrecken,
wobei die Flügel (34) im Wesentlichen eben und spiegelsymmetrisch in Bezug auf eine Symmetrieebene des Fittings sind, welche sich durch den mittleren Abschnitt und entlang desselben erstreckt, und
wobei die Verbindungsmittel (50, 52) den Rohrabschnitt in einer Orientierung halten, in der die Achse des Rohrabschnitts in der Symmetrieebene des Fittings liegt, **dadurch gekennzeichnet, dass**
ein jeder Flügel sich in einer Richtung von dem mittleren Abschnitt fort unter einem Winkel von mindestens 3° in Bezug auf die Tragefläche (2) in einer Richtung annähert, die sich von dem mittleren Abschnitt fort erstreckt und orthogonal zu dessen Längsachse ist,
dass der äußere lange Rand eines jeden Flügels (34), der parallel zu dem mittleren Abschnitt (33) ist, über ein feststellbares Schwenkgelenk (60, 61) mit einer zugehörigen Lamelle (70) verbunden ist, wobei die Achse des Schwenkgelenks (60, 61) im Wesentlichen parallel zur Längsachse des mittleren Abschnitts (33) ist, und
die gesamte Breite des Fittings, inklusive des mittleren Abschnitts (33) der Flügel (34) und eines Paares von Lamellen (70) im Wesentlichen dem größten Abstand zwischen den Düsen (40) in dem Umfangsbereich in Umfangsrichtung betrachtet entspricht.

2. Fitting nach Anspruch 1, **dadurch gekennzeichnet, dass** das Fitting einen zentralen länglichen mittleren Abschnitt (33) aufweist, der dazu ausgelegt ist, ein Ende der Verbindungsmittel (50, 52) aufzunehmen, wobei das andere Ende der Verbindungsmittel mit dem Rohrabschnitt (4) in der Symmetrieebene des Fittings verbunden ist.

3. Fitting nach Anspruch 1 oder 2, **dadurch gekennzeichnet, dass** der freie lange Rand des Flügels (34) eine erste Gestalt (60) aufweist, die einen Teil des Schwenkgelenks bildet, dass einer der langen Randteile der Lamelle (70) eine zweite Gestalt (61) aufweist, die gelenkig mit der ersten Gestalt des Flügels zusammenwirkt, und dass der andere lange Randteil der Lamelle (70) die erste Gestalt (60) aufweist, um gelenkig mit einer zusätzlichen Lamelle gleicher Bauart verbindbar zu sein.

4. Fitting nach einem der Ansprüche 1 bis 3, **dadurch gekennzeichnet, dass** die Lamelle (70) an ihrem äußeren Ende auf der Seite, die dem Rohrabschnitt (4) zugewandt ist, eine vorstehende Kante (72) aufweist, die sich entlang der Länge der Lamelle erstreckt und die einen spitzen Winkel mit dem Abschnitt der Lamelle (70) zwischen der Kante (72) und dem ersten langen Randteil (61) der Lamelle bildet.

5. Fitting nach einem der Ansprüche 1 bis 4, **dadurch gekennzeichnet, dass** der mittlere Abschnitt die Form einer Nut aufweist, die eine Mutter (50) so aufnimmt, dass sie verschiebbar, aber nicht drehbar ist, wobei die Mutter zu den jeweiligen Befestigungsmitteln (50, 51) gehört.

6. Fitting nach Anspruch 5, **dadurch gekennzeichnet, dass** die Nut dazu ausgelegt ist, mit ihrem Boden an der Tragefläche anzuliegen, dass die Flügel mit einem ihrer langen Ränder (60) mit dem jeweiligen Rand der Öffnung der Nut verbunden sind, und dass die anderen langen Randteile (60) der Flügel (34) im Wesentlichen an der Tragefläche (2) anliegen, wobei die Flügel (34) vorzugsweise im Wesentlichen eben sind.

7. Fitting nach einem der Ansprüche 1 bis 6, **dadurch gekennzeichnet, dass** die Teile der Schwenkgelenke (60, 61) einen im Wesentlichen C-förmigen Querschnitt aufweisen, und dass die Schwenkgelenke mit Hilfe eines Spreizelements feststellbar sind, welches in dem Ende des Innenteils des Schwenkelementes montierbar ist, um die Teile in gegenseitigen radialen Eingriff zu bringen.

8. Fitting nach einem der Ansprüche 1 bis 7, **dadurch gekennzeichnet, dass** die Befestigungsmittel ausgewählt sind, um einen Abstand zwischen dem Rohrabschnitt und dem Mittelteil (33) des Fittings herzustellen, wobei der Abstand im Wesentlichen der Breite eines Flügels und einer Lamelle entspricht.

## Revendications

1. Pièce de fixation permettant de suspendre un dispositif terminal d'alimentation en air sur une surface de support (2) comme un mur ou un plafond d'une pièce (1), le dispositif terminal d'alimentation en air comprenant une section de tuyau allongée (4), dont une extrémité assure la liaison avec un tuyau d'alimentation en air (6), la section de tuyau (4) comportant une pluralité de buses d'écoulement d'air (40), qui sont réparties le long de la section de tuyau (4) dans une zone circonférentielle de celle-ci, les buses (40) faisant saillie depuis l'extérieur de la section de tuyau, et la pièce de fixation (3) étant conçue de manière à pouvoir être montée sur la surface de support (2) selon une orientation fixe par rapport à celle-ci, supportant la section de tuyau (4) au moyen de dispositifs de connexion (50, 52), et comportant une paire d'ailes qui font saillie dans des directions opposées depuis un côté respectif d'une partie intermédiaire centrale dans la direction de la longueur (33), les ailes (34) étant sensiblement planes et à symétrie spéculaire par rapport à un plan de symétrie de la pièce de fixation s'étendant à travers la partie intermédiaire et le long de celle-ci, et les dispositifs de connexion (50, 52) maintenant la section de tuyau dans une orientation dans laquelle l'axe de la section de tuyau repose dans le plan de symétrie de la pièce de fixation, **caractérisée en ce que** chaque aile, dans la direction s'éloignant de la partie intermédiaire, converge selon un angle d'au moins 3° par rapport à la surface de support (2) dans une direction qui s'étend dans la direction s'éloignant de la partie intermédiaire et perpendiculairement à l'axe longitudinal de celle-ci, **en ce que** le long bord externe de chaque aile (34) parallèle à la partie intermédiaire (33) est relié à une ailette annexe (70) via un joint articulé pouvant être verrouillé (60, 61), l'axe du joint articulé (60, 61) étant sensiblement parallèle à l'axe longitudinal de la partie intermédiaire (33), et **en ce que** la largeur totale de la pièce de fixation comprenant la partie intermédiaire (33), les ailes (34) et une paire d'ailettes (70) correspond sensiblement à l'espacement maximal dans la direction circonférentielle entre les buses (40) dans ladite zone circonférentielle.

2. Pièce de fixation selon la revendication 1, **caractérisée en ce que** la pièce de fixation comporte une partie intermédiaire allongée centrale (33), qui est conçue de manière à recevoir une extrémité des dispositifs de connexion (50, 52), l'autre extrémité étant reliée à la section de tuyau (4) dans le plan de symétrie de la pièce de fixation.

3. Pièce de fixation selon la revendication 1 ou 2, **caractérisée en ce que** le long bord libre de l'aile (34) comporte une première formation (60) formant une partie du joint articulé, **en ce que** l'une des parties de bord long de l'ailette (70) comporte une seconde formation (61) qui coopère de manière articulée avec la première formation (60) de l'aile, et **en ce que** l'autre longue partie de bord long de l'ailette (70) comporte la première formation (60) devant pouvoir être reliée de manière articulée à une ailette supplémentaire conçue de la même manière.

4. Pièce de fixation selon l'une quelconque des revendications 1 à 3, **caractérisée en ce qu'**au niveau de l'extrémité externe du côté de l'ailette (70) faisant face à la section de tuyau (4), une bordure faisant saillie (72) s'étend sur la longueur de l'ailette et forme un angle aigu avec la partie de l'ailette (70) entre la bordure (72) et la première partie de bord long (61) de l'ailette.

5. Pièce de fixation selon l'une quelconque des revendications 1 à 4, **caractérisée en ce que** la partie intermédiaire (33) se présente sous la forme d'une rainure qui reçoit un écrou (50) de manière déplaçable en rotation, l'écrou appartenant au dispositif de fixation respectif (50-51).

6. Pièce de fixation selon la revendication 5, **caractérisée en ce que** la rainure est conçue de manière à reposer, avec le fond de celle-ci, contre la surface de support, **en ce que** les ailes assurent la liaison, au moyen de l'un des longs bords (60) de celles-ci, avec le bord d'ouverture respectif de la rainure, et **en ce que** les autres parties de bord long (60) des ailes (34) reposent sensiblement contre la surface de support (2), les ailes (34) étant de préférence sensiblement planes.

7. Pièce de fixation selon l'une quelconque des revendications 1 à 6, **caractérisée en ce que** les parties des joints articulés (60, 61) présentent généralement une coupe transversale en forme de C, et **en ce que** les joints articulés peuvent être verrouillés au moyen d'un agrandisseur de diamètre pouvant être monté dans l'extrémité de la partie interne du joint articulé afin d'amener les pièces en prise radiale mutuelle.

8. Pièce de fixation selon l'une quelconque des revendications 1 à 7, **caractérisée en ce que** les dispositifs de fixation (50-52) sont choisis afin d'établir une distance entre la section de tuyau et la partie intermédiaire (33) de la pièce de fixation, cette distance correspondant sensiblement à la largeur d'une aile et d'une ailette.
